# EUROPÄISCHE PATENTANMELDUNG

(11) **EP 3 281 775 A1**
(43) Veröffentlichungstag der Anmeldung: **14.02.2018**
(21) Anmeldenummer: 16183227.4
(22) Anmeldetag: 08.08.2016
(51) Int. Cl.: B29C 67/00, B33Y 40/00, B29B 13/06

(54) **FERTIGUNGSVORRICHTUNG**

(71) Anmelder: Technische Universität München, 80333 München (DE)
(72) Erfinder: FISCHER, Stefan, 82377 Penzberg (DE); PAMMER, Sebastian Tobias, 81679 München (DE); LEONHARDT, Stefan, 80797 München (DE); HAERST, Miriam, 80634 München (DE)
(74) Vertreter: Hoefer & Partner Patentanwälte mbB

(57) **Zusammenfassung**

Die Erfindung betrifft eine Fertigungsvorrichtung (1) zum schichtweisen Herstellen eines dreidimensionalen Objekts (12), umfassend eine Zufuhrvorrichtung (2) zum Zuführen eines Ausgangsmaterials, und eine Auftragevorrichtung (3) zum Aufschmelzen des Ausgangsmaterials und zum schichtweisen Formen des aufgeschmolzenen Ausgangsmaterials zu dem Objekt (12), wobei die Zufuhrvorrichtung (2) eine Trocknungsvorrichtung (4) zum Trocknen des Ausgangsmaterials umfasst oder eine Trocknungsvorrichtung (4) der Zufuhrvorrichtung (2) vorgeschaltet ist.

## Beschreibung

Die vorliegende Erfindung betrifft eine Fertigungsvorrichtung zum schichtweisen Herstellen eines dreidimensionalen Objekts. Außerdem betrifft die Erfindung ein Verfahren zum schichtweisen Herstellen eines dreidimensionalen Objekts.

Aus dem Stand der Technik ist das schichtweise Herstellen von dreidimensionalen Objekten bekannt. Dies wird insbesondere als Variante des "Rapid Prototyping" verwendet, um Gegenstände rasch und in beliebigen Formen herzustellen. Ein derartiges Verfahren ist insbesondere die Schmelzschichtung (Fused Deposition Modeling oder Fused Filament Fabrication). Bei diesem Verfahren wird das zu fertigende Objekt schichtweise aus einem schmelzfähigen Kunststoff aufgebaut. Dazu wird ein Ausgangsmaterial verwendet, das einer Auftragevorrichtung zugeführt wird. In dieser Auftragevorrichtung, auch Extrusion Head genannt, wird das Ausgangsmaterial aufgeschmolzen, um so eine Schicht des dreidimensionalen Objekts herzustellen. Anschließend wird die Auftragevorrichtung und/oder eine das Objekt tragende Plattform um eine Schichtdicke verschoben, sodass eine neue Schicht auf die alte Schicht aufgebracht werden kann.

Aus dem Stand der Technik sind Thermoplaste bekannt, die sich zur Verwendung bei solchen Fertigungsverfahren eignen. Solche Kunststoffe weisen bis zu 9 Gew.-% Wasser auf, was große Probleme beim Verarbeitungsprozess bewirken kann. So führt eine zu hohe Wassereinlagerung in dem Kunststoff zu Dampfbläschen während des Verarbeitens und/oder zu Schaumbildung. Weiterhin ergeben sich Füllprobleme, Entformungsprobleme, Viskositätsschwankungen, streuende Prozessparameter und/oder schwankende Durchsätze. Bei einer Weiterverarbeitung der hergestellten dreidimensionalen Objekte können Probleme beim Galvanisieren oder Lackieren auftreten. Bei anderen Kunststoffarten löst das Wasser während des Aufschmelzens des Kunststoffs eine chemische Reaktion aus, welche die Molekularstruktur verändert. Diese als Hydrolyse bezeichnete Reaktion hat ein reduziertes Molekulargewicht zur Folge, mit dem Ergebnis, dass die Viskosität des Kunststoffs sinkt. Nicht zuletzt ergeben sich bei Verwendung von zu feuchten Kunststoffen auch optische, chemische und/oder physikalische Nachteile. Offensichtliche Fehler sind insbesondere Schlieren, Hohlräume, Löcher und/oder Blasen an der Oberfläche.

Es ist daher Aufgabe der Erfindung, eine Fertigungsvorrichtung bereitzustellen, die bei einfacher und kostengünstiger Herstellung und Montage ein sicheres und zuverlässiges Herstellen von dreidimensionalen Objekten ermöglicht. Es ist außerdem Aufgabe der Erfindung, ein entsprechendes Verfahren anzugeben.

Die Lösung dieser Aufgabe erfolgt durch die Merkmale der unabhängigen Ansprüche. Die Unteransprüche haben bevorzugte Weiterbildungen der Erfindung zum Inhalt.

Die Aufgabe wird somit gelöst durch eine Fertigungsvorrichtung zum schichtweisen Herstellen eines dreidimensionalen Objekts. Die Fertigungsvorrichtung umfasst dabei eine Zufuhrvorrichtung und eine Auftragevorrichtung. Die Zufuhrvorrichtung ist zum Zuführen eines Ausgangsmaterials ausgebildet. Besonders vorteilhaft ist strangförmiges Ausgangsmaterial zuführbar, sodass die Zufuhrvorrichtung das strangförmige Ausgangsmaterial der Auftragevorrichtung zuführt. Die Auftragevorrichtung wiederum dient zum Aufschmelzen und schichtweisen Formen des aufgeschmolzenen Ausgangsmaterials zu dem herzustellenden dreidimensionalen Objekt. Dazu ist die Auftragevorrichtung vorteilhafterweise als Düse ausgebildet, die das aufgeschmolzene Ausgangsmaterial, vorzugsweise den aufgeschmolzenen Kunststoff, in eine zweidimensionale Form bringen kann. Somit entspricht die Auftragevorrichtung im Wesentlichen einem Druckkopf, wobei pro Druckvorgang eine Schicht des dreidimensionalen Objekts herstellbar ist. Auf die somit hergestellte Schicht kann anschließend eine weitere Schicht aus dem aufgeschmolzenen Ausgangsmaterial aufgebracht werden. Es ist außerdem vorgesehen, dass die Zufuhrvorrichtung eine Trocknungsvorrichtung umfasst oder eine Trocknungsvorrichtung der Zufuhrvorrichtung vorgeschaltet ist. Die Trocknungsvorrichtung ist zum Trocknen des Ausgangsmaterials ausgebildet. Somit ist das Ausgangsmaterial trockenbar bevor dieses die Auftragevorrichtung erreicht. Auf diese Weise sind insbesondere die Schritte des Aufschmelzens und des Trocknens getrennt. Erreicht das Ausgangsmaterial die Auftragevorrichtung, so ist durch die Trocknungsvorrichtung sichergestellt, dass ein ausreichend trockenes Ausgangsmaterial vorhanden ist. Die Trocknungsvorrichtung ist dazu insbesondere eingerichtet, den Anteil des aufgenommenen Wassers innerhalb des Ausgangsmaterials auf einen vorgebbaren bzw. vorgegebenen Gewichtsprozentgrenzwert zu senken. Durch das Trocknen des Ausgangsmaterials lassen sich somit die oben beschriebenen Nachteile vermeiden, wobei das Trocknen auf einfache und kostengünstige Art durchgeführt wird. Insbesondere ist mit der erfindungsgemäßen Fertigungsvorrichtung vermeidbar, dass vorgetrocknetes Ausgangsmaterial aufwändig gelagert werden muss, damit während der Lagerung die Feuchtigkeit des Ausgangsmaterials nicht zunimmt, um anschließend das vorgetrocknete Ausgangsmaterial in einer hermetisch geschirmten Fertigungsvorrichtung zu verwenden.

Die Erfindung betrifft außerdem ein Verfahren zum schichtweisen Herstellen eines dreidimensionalen Objekts. Das Verfahren umfasst die folgenden Schritte: Zunächst erfolgt ein Zuführen eines Ausgangsmaterials zu einer Auftragevorrichtung. Die Auftragevorrichtung ist insbesondere als Düse ausgebildet und ermöglicht bevorzugt ein Aufschmelzen des Ausgangsmaterials. Somit erfolgt in einem weiteren Schritt das Aufschmelzen des Ausgangsmaterials durch die Auftragevorrichtung. Außerdem erfolgt ein schichtweises Formen des aufgeschmolzenen Ausgangsmaterials zu dem herzustellenden dreidimensionalen Objekt. Dazu ist vorgesehen, dass die Auftragevorrichtung jeweils eine Schicht formt, sodass anschließend eine weitere Schicht auf die zuvor geformte Schicht auftragbar ist. Das Ausgangsmaterial wird dabei während des Zuführens zu der Auftragevorrichtung oder vor dem Zuführen zu der Auftragevorrichtung getrocknet. Somit ist eine sichere und zuverlässige Herstellung von dreidimensionalen Objekten ermöglicht, da durch den Schritt des Trocknens stets sichergestellt ist, dass von der Auftragevorrichtung während des Aufschmelzens und des schichtweisen Formens nur solches Ausgangsmaterial verwendet wird, das eine geringe Feuchtigkeit aufweist. Unter geringer Feuchtigkeit ist zu verstehen, dass der Wasseranteil unterhalb eines vorgebbaren bzw. vorgegebenen Gewichtsprozentgrenzwerts liegt. Da das Trocknen in das Zuführen integriert ist, ist außerdem der Fertigungsprozess für die dreidimensionalen Objekte einfach und kostengünstig und erlaubt einen hohen Durchsatz. Insbesondere im Vergleich zum Stand der Technik wird durch das Trocknen keine zusätzliche Prozesszeit benötigt, die den gesamten Fertigungsprozess verlangsamen würde.

Vorteilhafterweise umfasst die Trocknungsvorrichtung eine Heizvorrichtung und/oder einen Mikrowellengenerator und/oder Trockenmittel und/oder ein osmotisches Gefälle und/oder ein Vakuum. Mit der Heizvorrichtung ist das Ausgangsmaterial aufheizbar. Durch die Temperaturerhöhung verdampft die Feuchtigkeit im Ausgangsmaterial, wodurch das Ausgangsmaterial getrocknet werden kann. Mittels dem Trockenmittel und/oder dem osmotischen Gefälle und/oder dem Vakuum erfolgt ein Trocknen ohne Aufheizung des Ausgangsmaterial

Die Heizvorrichtung umfasst bevorzugt eine Infrarotheizung und/oder ein elektrisches Heizelement und/oder einen Mikrowellengenerator. Insbesondere ist vorgesehen, dass eine Wärmeübertragung auf das Ausgangsmaterial erfolgt, während das Ausgangsmaterial durch die Heizvorrichtung geführt wird. Somit ist das Trocknen durch die Heizvorrichtung ein kontinuierlicher Prozess. Die Infrarotheizung und/oder das elektrische Heizelement und/oder der Mikrowellengenerator weisen somit eine Länge entlang des Ausgangsmaterials auf, die eine ausreichende Wärmezufuhr auf das durch die Heizvorrichtung geführte Ausgangsmaterial erlaubt. Insbesondere muss die Heizvorrichtung eine derartige Länge entlang des Ausgangsmaterials aufweisen, dass der zuvor beschriebene maximale Gewichtsprozentgrenzwert an Wasser innerhalb des Ausgangsmaterials erreicht werden kann.

Gemäß einem bevorzugten Ausführungsbeispiel ist die Leistung der Trocknungsvorrichtung, vorzugsweise die Heizleistung der Heizvorrichtung, anpassbar, insbesondere in Abhängigkeit von dem vorgebbaren bzw. vorgegebenen Gewichtsprozentgrenzwert des Wasseranteils. Besonders bevorzugt umfasst die Fertigungsvorrichtung eine Steuerungs- oder Regelungsvorrichtung, welche ausgebildet ist, die Leistung der Trocknungsvorrichtung, insbesondere die Heizleistung der Heizvorrichtung, einzustellen.

In einem weiteren Ausführungsbeispiel ist zusätzlich mindestens eine, der Trocknungsvorrichtung vorgeschaltete, erste Messvorrichtung vorgesehen, welche ausgebildet ist, den Wasseranteil innerhalb des Ausgangsmaterials vor dessen Zuführung zur Trockungsvorrichtung und/oder am Eingang der Trocknungsvorrichtung zu bestimmen. Die erste Messvorrichtung kann insbesondere den Wasseranteil des Ausgangsmaterials mittels Mikrowellenresonanz und/oder kapazitiv und/oder über ohmschen Widerstand und/oder über Infrarotreflexion bestimmen. Die Steuerungs- oder Regelungsvorrichtung, ist bevorzugt ausgebildet, die Leistung der Trocknungsvorrichtung, insbesondere die Heizleistung der Heizvorrichtung, in Abhängigkeit von dem mittels der ersten Messvorrichtung bestimmten Wasseranteil innerhalb des Ausgangsmaterials und dem vorgebbaren bzw. vorgegebenen Gewichtsprozentgrenzwert des Wasseranteils zu steuern.

Alternativ oder zusätzlich kann mindestens eine zweite Messvorrichtung vorgesehen sein, welche ausgebildet und angeordnet ist, den Wasseranteil innerhalb des Ausgangsmaterials während der Trocknung des Ausgangsmaterials in der Trocknungsvorrichtung und/oder am Ausgang der Trocknungsvorrichtung zu bestimmen, um zu überprüfen, dass das Ausgangsmaterial am Ausgang der Trocknungsvorrichtung einen Wasseranteil aufweist, welcher den vorgebbaren bzw. vorgegebenen Gewichtsprozentgrenzwert nicht überschreitet. Bevorzugt kann die Steuerungs- oder Regelungsvorrichtung anhand des mittels der mindestens einen zweiten Messvorrichtung bestimmten Wasseranteils die Leistung der Trocknungsvorrichtung erhöhen oder absenken.

Durch die Heizvorrichtung ist das Ausgangsmaterial auf eine Temperatur unterhalb dessen Schmelztemperatur aufheizbar. Auf diese Weise wird verhindert, dass das Ausgangsmaterial bereits in der Zufuhrvorrichtung aufschmilzt. Das Aufschmelzen erfolgt somit lediglich in der Auftragevorrichtung. Vor Erreichen der Auftragevorrichtung weist das Ausgangsmaterial einen festen Zustand auf. Die Heizvorrichtung dient somit lediglich dem Trocknen des Ausgangsmaterials.

Die Trocknungsvorrichtung umfasst vorteilhafterweise ein Gebläse. Das Gebläse ist besonders vorteilhaft mit der zuvor beschriebenen Heizvorrichtung kombinierbar. Auf diese Weise ist die Trocknung optimierbar. Insbesondere lässt sich eine Umgebungsluft um das Ausgangsmaterial bewegen und/oder ableiten, wodurch eine Trocknungsleistung durch Aufnahme von Wasser aus dem Ausgangsmaterial durch die Umgebungsluft und/oder durch das Ableiten der Feuchtigkeit verbessert ist.

Die Trocknungsvorrichtung weist bevorzugt eine Trockenluftzufuhr und eine Feuchtluftabfuhr auf. Über die Trockenluftzufuhr ist Luft zum Trocknen des Ausgangsmaterials zuführbar. Über die Feuchtluftabfuhr ist die feuchte Luft nach dem Trocknen des Ausgangsmaterials abführbar. Somit lässt sich die Feuchtigkeit von dem Ausgangsmaterial wegführen.

Die Trocknungsvorrichtung umfasst bevorzugt ein Substrat zur Feuchtigkeitsaufnahme. Die Feuchtigkeitsaufnahme ist insbesondere zur Luftentfeuchtung verwendbar. Somit ist die Feuchtigkeit, die durch die Trocknungsvorrichtung von dem Ausgangsmaterial abgeführt wird, in dem Substrat speicherbar. Auf diese Weise ist ein Befeuchten einer Umgebung der Fertigungsvorrichtung vermieden. Das Substrat zur Feuchtigkeitsaufnahme und/oder Luftentfeuchtung ist vorteilhafterweise austauschbar und kann daher gewechselt werden, wenn dieses eine vordefinierte Menge an Feuchtigkeit aufgenommen hat.

Die Zufuhrvorrichtung weist bevorzugt einen ersten Abschnitt und einen zweiten Abschnitt auf. Über den ersten Abschnitt ist ungetrocknetes Ausgangsmaterial zu der Trocknungsvorrichtung führbar. Über den zweiten Abschnitt ist das getrocknete Ausgangsmaterial von der Trocknungsvorrichtung zu der Auftragevorrichtung führbar. Insbesondere umschließt der erste Abschnitt und/oder der zweite Abschnitt das Ausgangsmaterial vollständig. Somit ist insbesondere sichergestellt, dass das Ausgangsmaterial während des Zuführens von der Trocknungsvorrichtung zu der Auftragevorrichtung entlang des zweiten Abschnitts nicht erneut Feuchtigkeit aufnehmen kann. Alternativ umschließt der erste Abschnitt und der zweite Abschnitt das Ausgangsmaterial nur teilweise. Um ein Aufnehmen von Feuchtigkeit zu verhindern, ist dann bevorzugt vorgesehen, dass das Ausgangsmaterial nur mit getrockneter Luft in Kontakt gelangt oder durch ein Vakuum geführt ist.

Besonders vorteilhaft ist über den ersten Abschnitt das Ausgangsmaterial aus einer Vorratsrolle entnehmbar. Solche Vorratsrollen sind aus dem Stand der Technik bekannt und dienen dazu, das Ausgangsmaterial sicher und zuverlässig zu lagern. Durch die Verwendung der Trocknungsvorrichtung innerhalb der Zufuhrvorrichtung ist es somit nicht notwendig, dass diese Vorratsrollen bereits getrocknetes Ausgangsmaterial aufweisen, wodurch eine Lagerung und Handhabung der Vorratsrollen sehr vereinfacht ist.

Weiterhin ist vorteilhafterweise vorgesehen, dass die Zufuhrvorrichtung ein Rohrelement umfasst. In dem Rohrelement ist das Ausgangsmaterial führbar. Das Rohrelement kann vorteilhafterweise flexibel ausgestaltet und somit ein Schlauchelement sein. Innerhalb des Rohrelements ist das Ausgangsmaterial bevorzugt eng geführt, sodass ein notwendiger Druck auf das Ausgangsmaterial aufgebracht werden kann, der für das Formen durch die Auftragevorrichtung benötigt wird. Alternativ wird der für das Formen notwendige Druck allein durch die Auftragevorrichtung auf das Ausgangsmaterial aufgebracht. Gleichzeitig schirmt das Rohrelement das Ausgangsmaterial von einer Umgebung ab, wodurch eine Aufnahme von Feuchtigkeit aus der Umgebung vermieden ist. In einer ersten vorteilhaften Alternative umfasst die Zufuhrvorrichtung zusätzlich den zuvor beschriebenen ersten Abschnitt und zweiten Abschnitt. Somit ist ein Anfangsrohrelement vorhanden, das das Ausgangsmaterial zu der Trocknungsvorrichtung führt, während ein Endrohrelement das Ausgangsmaterial von der Trocknungsvorrichtung zu der Auftragevorrichtung führt. In einer zweiten Alternative ist bevorzugt vorgesehen, dass die Trocknungsvorrichtung in das Rohrelement integriert ist, sodass sich die Trocknungsvorrichtung zumindest über einen Teilbereich des Rohrelements erstreckt. Über diesen Teilbereich des Rohrelements ist das Ausgangsmaterial somit trockenbar.

Die Zufuhrvorrichtung ist besonders vorteilhaft ausgebildet, der Auftragevorrichtung ein erstes Ausgangsmaterial und ein zweites Ausgangsmaterial zuzuführen. Dabei ist die Trocknungsvorrichtung zum Trocknen sowohl des ersten Ausgangsmaterials als auch des zweiten Ausgangsmaterials ausgebildet. Das erste Ausgangsmaterial ist vorteilhafterweise ein Fertigungsmaterial, aus dem das dreidimensionale Objekt gefertigt werden soll. Das zweite Ausgangsmaterial ist insbesondere ein Hilfsmaterial, das zum Erstellen von Stützvorrichtungen dient. Dieses Hilfsmaterial lässt sich nach dem Fertigen des dreidimensionalen Objekts wieder entfernen. Durch die Verwendung derselben Trocknungsvorrichtung ist die Fertigung des dreidimensionalen Objekts sehr einfach und kostengünstig durchführbar, wobei während der Fertigung auch ein Hilfsmaterial zum Herstellen einer Stützstruktur verwendet werden kann.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig.1: eine schematische Abbildung einer Fertigungsvorrichtung gemäß einem ersten Ausführungsbeispiel der Erfindung,
- Fig. 2: eine schematische Abbildung einer Fertigungsvorrichtung gemäß einem zweiten Ausführungsbeispiel der Erfindung, und
- Fig. 3: eine schematische Abbildung einer Fertigungsvorrichtung gemäß einem dritten Ausführungsbeispiel der Erfindung.

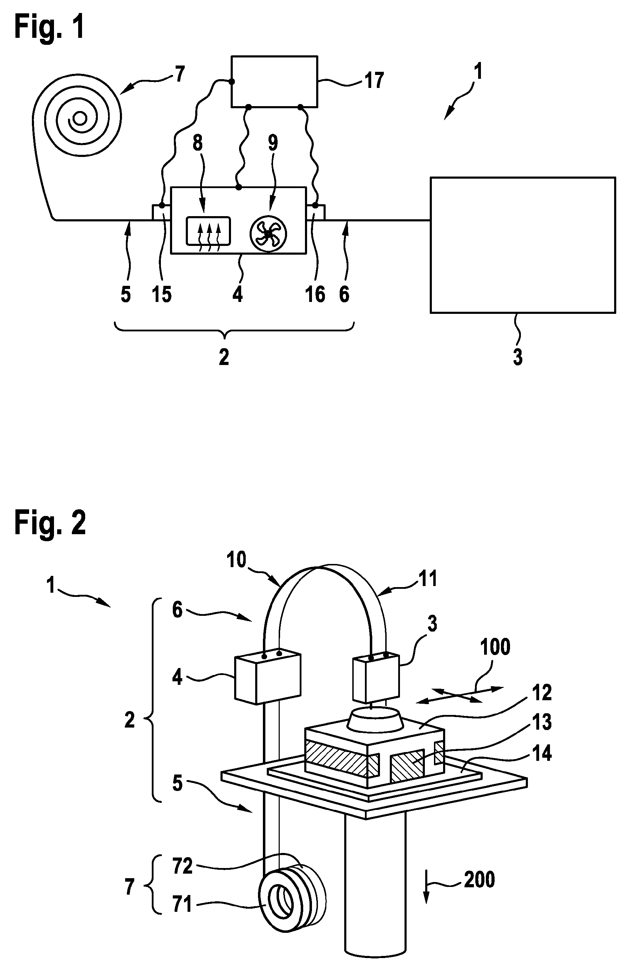

Fig. 1 zeigt schematisch eine Fertigungsvorrichtung 1 gemäß einem ersten Ausführungsbeispiel der Erfindung. Die Fertigungsvorrichtung 1 umfasst eine Zufuhrvorrichtung 2 sowie eine Auftragevorrichtung 3. Über die Zufuhrvorrichtung 2 ist ein Ausgangsmaterial aus einer Vorratsrolle 7 der Auftragevorrichtung 3 zuführbar. Die Auftragevorrichtung 3 dient zum Aufschmelzen des Ausgangsmaterials und zum Formen einer Schicht aus dem Ausgangsmaterial. Sobald die Schicht geformt ist, erfolgt das Aufbringen einer weiteren Schicht auf die zuvor fertiggestellte Schicht. Auf diese Weise lässt sich aus dem Ausgangsmaterial ein dreidimensionales Objekt schichtweise herstellen. Die Zufuhrvorrichtung 2 umfasst einen ersten Abschnitt 5, einen zweiten Abschnitt 6, sowie eine Trocknungsvorrichtung 4. Über den ersten Abschnitt 5 ist das Ausgangsmaterial aus der Vorratsrolle 7 entnehmbar und der Trocknungsvorrichtung 4 zuführbar. Über den zweiten Abschnitt 6 ist das Ausgangsmaterial von der Trocknungsvorrichtung 4 zu der Auftragevorrichtung 3 führbar.

Die Trocknungsvorrichtung 4 umfasst eine Heizvorrichtung 8 sowie ein Gebläse 9. Die Heizvorrichtung 8 ist insbesondere ein elektrisches Heizelement und dient zum Erhitzen des Ausgangsmaterials auf eine Temperatur unterhalb dessen Schmelztemperatur. Somit wird das Ausgangsmaterial nicht an- oder aufgeschmolzen, gleichzeitig wird jedoch durch die zugeführte Wärme der Wasseranteil innerhalb des Ausgangsmaterials verringert. Auf diese Weise ist das Ausgangsmaterial durch die Trocknungsvorrichtung 4 trockenbar. Das Gebläse 9 dient insbesondere zum Verteilen der durch die Heizvorrichtung 8 erzeugten Wärme und insbesondere auch zum Abführen von feuchter Luft, die durch das Trocknen des Ausgangsmaterials entsteht. Anstelle des elektrischen Heizelements oder zusätzlich zum elektrischen Heizelement kann die Heizvorrichtung 8 auch eine Infrarotheizung und/oder einen Mikrowellengenerator und/oder Trockenmittel und/oder ein osmotisches Gefälle und/oder ein Vakuum umfassen.

Die Trocknungsvorrichtung 4 ist somit in die Zufuhrvorrichtung 2 integriert. Dies ermöglicht ein einfaches und kostengünstiges Trocknen des Ausgangsmaterials, wobei für das Trocknen keine zusätzliche Prozesszeit benötigt und das Herstellungsverfahren der dreidimensionalen Objekte durch die Auftragevorrichtung 3 somit nicht verzögert wird. Gleichzeitig ist sichergestellt, dass die Auftragevorrichtung 3 ausschließlich solches Material verarbeitet, das eine geringe Feuchtigkeit aufweist. Unter geringer Feuchtigkeit ist zu verstehen, dass ein Wasseranteil des Ausgangsmaterials unterhalb eines vorgebbaren bzw. vorgegebenen Gewichtsprozentgrenzwerts liegt. Durch die Verarbeitung von getrocknetem Ausgangsmaterial werden somit die eingangs beschriebenen Probleme vermieden.

Eine Heizleistung der Heizvorrichtung 8 ist insbesondere anpassbar. Dazu ist eine Steuerungs- oder Regelungsvorrichtung 17 vorhanden, mit der die Heizvorrichtung 8 ansteuerbar ist. Somit ist die Heizleistung mittels der Steuerungs- oder Regelungsvorrichtung 17 einstellbar.

Die Fertigungsvorrichtung 1 weist außerdem eine der Trocknungsvorrichtung 4 vorgeschaltete erste Messvorrichtung 15 auf. Die erste Messvorrichtung ist ausgebildet, den Wasseranteil innerhalb des Ausgangsmaterials am Eingang der Trocknungsvorrichtung 4 zu bestimmen. Die erste Messvorrichtung 15 kann insbesondere den Wasseranteil des Ausgangsmaterials mittels Mikrowellenresonanz und/oder kapazitiv und/oder über ohmschen Widerstand und/oder über Infrarotreflexion bestimmen. Die Steuerungs- oder Regelungsvorrichtung 17 ist ausgebildet, die Heizleistung der Heizvorrichtung 8 in Abhängigkeit von dem Wasseranteil des Ausgangsmaterials und von einem vorgebbaren bzw. vorgegebenen Gewichtsprozentgrenzwert des Wasseranteils zu steuern.

Ebenso weist die Fertigungsvorrichtung 1 eine zweite Messvorrichtung 16 auf. Die zweite Messvorrichtung 16 ist ausgebildet und angeordnet, den Wasseranteil innerhalb des Ausgangsmaterials am Ausgang der Trocknungsvorrichtung 4 zu bestimmen, um zu überprüfen, dass das Ausgangsmaterial am Ausgang der Trocknungsvorrichtung 4 einen Wasseranteil aufweist, welcher den vorgebbaren bzw. vorgegebenen Gewichtsprozentgrenzwert nicht überschreitet. Bevorzugt kann die Steuerungs- oder Regelungsvorrichtung anhand des mittels der mindestens einen zweiten Messvorrichtung bestimmten Wasseranteils die Leistung der Trocknungsvorrichtung erhöhen oder absenken.

Fig. 2 zeigt schematisch eine Fertigungsvorrichtung 1 gemäß einem zweiten Ausführungsbeispiel der Erfindung. Dabei zeigen gleiche Bezugszeichen wie in Fig. 1 gleiche oder gleichartige Bauteile wie in dem ersten Ausführungsbeispiel.

Im Unterschied zu dem ersten Ausführungsbeispiel umfasst die Fertigungsvorrichtung 1 gemäß dem zweiten Ausführungsbeispiel zwei Ausgangsmaterialien. Somit ist eine erste Vorratsrolle 71 und eine zweite Vorratsrolle 72 vorhanden. In der ersten Vorratsrolle 71 ist ein erstes Ausgangsmaterial vorhanden, während in der zweiten Vorratsrolle 72 ein zweites Ausgangsmaterial vorhanden ist. Das erste Ausgangsmaterial ist ein Baumaterial, mit dem ein dreidimensionales Objekt 12 schichtweise aufbaubar ist. Das zweite Ausgangsmaterial ist ein Stützmaterial, mit dem eine Stützstruktur 13 herstellbar ist. Die Stützstruktur 13 ist nach dem Fertigstellen des dreidimensionalen Objekts 12 wieder entfernbar.

Die Zufuhrvorrichtung 2 umfasst wiederum einen ersten Abschnitt 5, einen zweiten Abschnitt 6 sowie eine Trocknungsvorrichtung 4. Die Trocknungsvorrichtung 4 ist identisch wie im ersten Ausführungsbeispiel ausgebildet. Ein Unterschied besteht lediglich darin, dass durch die Trocknungsvorrichtung 4 sowohl das erste Ausgangsmaterial als auch das zweite Ausgangsmaterial geführt werden, um diese Materialien zu trocknen.

Sowohl der erste Abschnitt 5 als auch der zweite Abschnitt 6 der Zufuhrvorrichtung 2 umfassen ein erstes Rohrelement 10 und ein zweites Rohrelement 11. Über das erste Rohrelement 10 ist das erste Ausgangsmaterial der Auftragevorrichtung 3 zuführbar. Über das zweite Rohrelement 11 ist das zweite Ausgangsmaterial der Auftragevorrichtung 3 zuführbar. Die Auftragevorrichtung 3 umfasst für jedes Ausgangsmaterial eine eigene Auftragedüse (nicht gezeigt), über die das aufgeschmolzene erste Ausgangsmaterial oder zweite Ausgangsmaterial auf eine Plattform 14 aufbringbar ist. Dazu ist die Auftragevorrichtung 3 innerhalb einer Ebene parallel zu der Plattform 14 bewegbar, was in Fig. 2 durch die ersten Bewegungsrichtungen 100 angezeigt ist. Durch die Bewegung der Auftragevorrichtung 3 entlang der ersten Bewegungsrichtungen 100 lässt sich somit eine Schicht auf der Plattform 14 formen. Die Schicht kann dabei sowohl durch das erste Ausgangsmaterial als auch durch das zweite Ausgangsmaterial gebildet werden, sodass entweder eine Schicht des herzustellenden Objekts 12 oder einer zusätzlichen Stützstruktur 13 aufgebracht werden kann. Anschließend wird die Plattform 14 entlang einer zweiten Bewegungsrichtung 200 verfahren. Das Verfahren entlang der zweiten Bewegungsrichtung 200 entspricht einem Absenken der Plattform 14, sodass durch die Auftragevorrichtung 3 eine neue Schicht auf die zuvor erstellte Schicht aufgetragen werden kann. Auf diese Weise lässt sich das dreidimensionale Objekt 12 schichtweise herstellen.

Da die Auftragevorrichtung 3 jederzeit getrocknetes Ausgangsmaterial zum Herstellen der Schichten des dreidimensionalen Objekts 12 zur Verfügung gestellt bekommt, ist ein sicheres und zuverlässiges Herstellen des dreidimensionalen Objekts 12 ermöglicht. Die eingangs genannten Probleme werden somit vermieden.

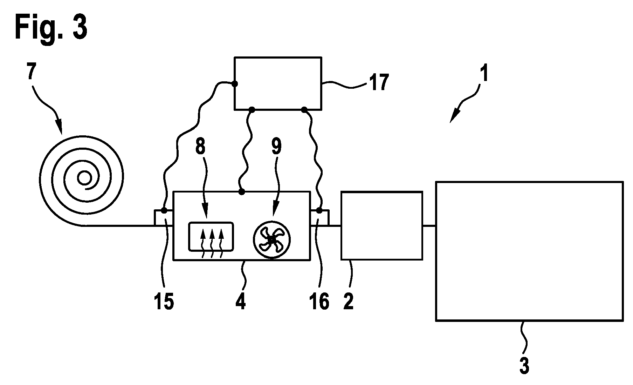

Figur 3 zeigt ein drittes Ausführungsbeispiel der Fertigungsvorrichtung 1. Dabei entspricht das dritte Ausführungsbeispiel im Wesentlichen dem ersten Ausführungsbeispiel. In dem dritten Ausführungsbeispiel ist die Trocknungsvorrichtung 4 der Zufuhrvorrichtung 2 vorgeschaltet. Somit wird durch die Trocknungsvorrichtung 4 das Ausgangsmaterial aus der Vorratsrolle 7 entnommen und getrocknet, sodass die Zufuhrvorrichtung 2 das getrocknete Ausgangsmaterial von der Trocknungsvorrichtung 4 übernimmt. Die Funktionsweise der übrigen Komponenten ist identisch wie im ersten Ausführungsbeispiel.

Neben der vorstehenden schriftlichen Beschreibung der Erfindung wird zu deren ergänzender Offenbarung hiermit explizit auf die zeichnerische Darstellung der Erfindung in den Fig. 1, 2 und 3 Bezug genommen.

### Bezugszeichenliste

- 1: Fertigungsvorrichtung
- 2: Zufuhrvorrichtung
- 3: Auftragevorrichtung
- 4: Trocknungsvorrichtung
- 5: erster Abschnitt
- 6: zweiter Abschnitt
- 7: Vorratsrolle
- 71: erste Vorratsrolle
- 72: zweite Vorratsrolle
- 8: Heizvorrichtung
- 9: Gebläse
- 10: erstes Rohrelement
- 11: zweites Rohrelement
- 12: dreidimensionales Objekt
- 13: Stützstruktur
- 14: Plattform
- 15: erste Messvorrichtung
- 16: zweite Messvorrichtung
- 17: Steuerungs- oder Regelungsvorrichtung

- 100: erste Bewegungsrichtungen
- 200: zweite Bewegungsrichtung

## Patentansprüche

1. Fertigungsvorrichtung (1) zum schichtweisen Herstellen eines dreidimensionalen Objekts (12), umfassend
- eine Zufuhrvorrichtung (2) zum Zuführen eines Ausgangsmaterials, und
- eine Auftragevorrichtung (3) zum Aufschmelzen des Ausgangsmaterials und zum schichtweisen Formen des aufgeschmolzenen Ausgangsmaterials zu dem Objekt (12),
- wobei die Zufuhrvorrichtung (2) eine Trocknungsvorrichtung (4) zum Trocknen des Ausgangsmaterials umfasst oder eine Trocknungsvorrichtung (4) der Zufuhrvorrichtung (2) vorgeschaltet ist.

2. Fertigungsvorrichtung (1) nach Anspruch 1, **dadurch gekennzeichnet, dass** die Trocknungsvorrichtung (4) eine Heizvorrichtung (8) und/oder einen Mikrowellengenerator und/oder Trockenmittel und/oder ein osmotisches Gefälle und/oder ein Vakuum umfasst.

3. Fertigungsvorrichtung (1) nach Anspruch 2, **dadurch gekennzeichnet, dass** die Heizvorrichtung (8) eine Infrarotheizung und/oder ein elektrisches Heizelement umfasst.

4. Fertigungsvorrichtung (1) nach Anspruch 2 oder 3, **dadurch gekennzeichnet, dass** eine Trocknungsleistung der Trocknungsvorrichtung (4), insbesondere eine Heizleistung der Heizvorrichtung (8), insbesondere mittels einer Steuerungs- oder Regelungsvorrichtung (17), einstellbar ist.

5. Fertigungsvorrichtung (1) nach Anspruch 4, **gekennzeichnet durch** eine erste Messvorrichtung (15) zum Erfassen des Wasseranteils des Ausgangsmaterials vor Erreichen der Trocknungsvorrichtung (4) und/oder am Eingang der Trocknungsvorrichtung (4), wobei die Steuerungs- oder Regelungsvorrichtung (17) eingerichtet ist, die Trocknungsleistung der Trocknungsvorrichtung (4), insbesondere die Heizleistung der Heizvorrichtung (8), in Abhängigkeit von dem mittels der ersten Messvorrichtung (15) erfassten Wasseranteil des Ausgangsmaterial einzustellen.

6. Fertigungsvorrichtung (1) nach Anspruch 4 oder 5, **gekennzeichnet durch** zumindest eine zweite Messvorrichtung (16) zum Erfassen des Wasseranteils des Ausgangsmaterials in der Trocknungsvorrichtung (4) und/oder am Ausgang der Trocknungsvorrichtung, wobei die Steuerungs- oder Regelungsvorrichtung (17) eingerichtet ist, die Trocknungsleistung der Trocknungsvorrichtung (4), insbesondere die Heizleistung der Heizvorrichtung (8), in Abhängigkeit von dem mittels der zweiten Messvorrichtung (15) erfassten Wasseranteil des Ausgangsmaterial einzustellen.

7. Fertigungsvorrichtung (1) nach einem der Ansprüche 2 bis 6, **dadurch gekennzeichnet, dass** die Heizvorrichtung (8) eingerichtet ist, das Ausgangsmaterial auf eine Temperatur unterhalb dessen Schmelztemperatur aufzuheizen.

8. Fertigungsvorrichtung (1) nach einem der vorhergehenden Ansprüche, **dadurch gekennzeichnet, dass** die Trocknungsvorrichtung (4) ein Gebläse (9) umfasst.

9. Fertigungsvorrichtung (1) nach einem der vorhergehenden Ansprüche, **dadurch gekennzeichnet, dass** die Trocknungsvorrichtung (4) eine Trockenluftzufuhr und eine Feuchtluftabfuhr umfasst.

10. Fertigungsvorrichtung (1) nach einem der vorhergehenden Ansprüche, **dadurch gekennzeichnet, dass** die Trocknungsvorrichtung (4) ein Substrat zur Feuchtigkeitsaufnahme und/oder Luftentfeuchtung enthält.

11. Fertigungsvorrichtung (1) nach einem der vorhergehenden Ansprüche, **dadurch gekennzeichnet**, das die Zufuhrvorrichtung (2) einen ersten Abschnitt (5) und einen zweiten Abschnitt (6) umfasst, wobei über den ersten Abschnitt (5) ungetrocknetes Ausgangsmaterial zu der Trocknungsvorrichtung (4) und über den zweiten Abschnitt (6) getrocknetes Ausgangsmaterial von der Trocknungsvorrichtung (4) zu der Auftragevorrichtung (3) führbar ist.

12. Fertigungsvorrichtung (1) nach Anspruch 9, **dadurch gekennzeichnet, dass** über den ersten Abschnitt (5) das Ausgangsmaterial aus einer Vorratsrolle (7) entnehmbar ist.

13. Fertigungsvorrichtung (1) nach einem der vorgehenden Ansprüche, **dadurch gekennzeichnet, dass** die Zufuhrvorrichtung (2) ein Rohrelement (10, 11) umfasst, in dem das Ausgangsmaterial führbar ist.

14. Fertigungsvorrichtung (1) nach einem der vorhergehenden Ansprüche, **dadurch gekennzeichnet, dass** die Zufuhrvorrichtung (2) der Auftragevorrichtung (3) ein erstes Ausgangsmaterial und ein zweites Ausgangsmaterial zuführt, wobei die Trocknungsvorrichtung (4) zum Trocknen sowohl des ersten Ausgangsmaterials als auch des zweiten Ausgangsmaterials ausgebildet ist.

15. Verfahren zum schichtweisen Herstellen eines dreidimensionalen Objekts (12), umfassend die Schritte:
- Zuführen eines Ausgangsmaterials zu einer Auftragevorrichtung (3), und
- Aufschmelzen des Ausgangsmaterials und schichtweises Formen des aufgeschmolzenen Auftragsmaterials zu dem Objekt (12),
- wobei das Ausgangsmaterial während des Zuführens zu der Auftragevorrichtung (3) oder vor dem Zuführen zu der Auftragevorrichtung (3) getrocknet wird.
